(19) Europäisches Patentamt
European Patent Office
Office européen des brevets

(11) **EP 2 846 535 B1**

(12) **FASCICULE DE BREVET EUROPEEN**

(45) Date de publication et mention
de la délivrance du brevet:
**09.03.2016 Bulletin 2016/10**

(51) Int Cl.:
*H04N 5/347* *(2011.01)*    *H04N 5/343* *(2011.01)*

(21) Numéro de dépôt: **14183973.8**

(22) Date de dépôt: **08.09.2014**

(54) **Dispositif et procédé d'acquisition compressive d'images**

Vorrichtung und Verfahren zur komprimierten Bilderfassung

Device and method for compressive image acquisition

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2013 FR 1358672**

(43) Date de publication de la demande:
**11.03.2015 Bulletin 2015/11**

(73) Titulaire: **COMMISSARIAT A L'ENERGIE ATOMIQUE ET AUX ENERGIES ALTERNATIVES**
**75015 Paris (FR)**

(72) Inventeurs:
• **Guicquero, William**
**91440 BURES-SUR-YVETTE (FR)**
• **Dupret, Antoine**
**91400 ORSAY (FR)**

(74) Mandataire: **Thibon, Laurent**
**Cabinet Beaumont**
**1, rue Champollion**
**38000 Grenoble (FR)**

(56) Documents cités:
**CN-A- 102 186 025    US-B1- 6 417 882**

**Description**

Domaine

La présente demande concerne le domaine des capteurs d'image CMOS de façon générale, et vise plus particulièrement la mise en oeuvre de méthodes d'acquisition compressive ("compressive sensing" en anglais) dans un capteur d'image CMOS.

Exposé de l'art antérieur

Un capteur d'image CMOS comprend généralement une pluralité de pixels disposés en lignes et en colonnes. Chaque pixel comporte une photodiode utilisée en inverse, dont la capacité de jonction est déchargée par un photo-courant en fonction d'une intensité lumineuse reçue. La mesure du niveau d'éclairement reçu par un pixel s'effectue en mesurant une grandeur représentative de la tension aux bornes de la photodiode à des instants choisis parmi lesquels la fin d'une période dite d'intégration, avant et après laquelle le pixel est réinitialisé par rechargement de sa photodiode.

Classiquement, lors d'une phase d'acquisition d'une image, pour chaque pixel du capteur, une valeur de sortie représentative du niveau d'éclairement reçu par le pixel pendant l'intégration est lue, numérisée, et mémorisée sous forme numérique. Pour réduire la quantité de données numériques à stocker/traiter en aval du capteur, la phase d'acquisition est souvent suivie d'une phase de compression de l'image numérisée.

Cette méthode classique d'acquisition d'une image numérisée complète, suivie d'une phase de compression de l'image numérisée, présente plusieurs inconvénients. En particulier, l'acquisition d'une image numérisée complète est relativement longue, ce qui constitue une limitation à l'augmentation des cadences d'acquisition des images. En outre, cette acquisition d'une image numérisée complète entraîne une consommation d'énergie électrique relativement importante par les circuits de lecture et de conversion analogique-numérique du capteur. Par ailleurs, la phase de compression de l'image numérisée peut comprendre des calculs relativement complexes, et implique de prévoir une unité de traitement numérique du signal dédiée à cette compression en sortie du capteur, éventuellement sur la même puce que le capteur. Ces divers inconvénients posent notamment problème dans les systèmes dans lesquels il existe des contraintes importantes sur l'acquisition et la compression des images en termes de vitesse de traitement et/ou de consommation électrique.

Pour tenter de pallier en partie ces inconvénients, on a déjà proposé des méthodes dites d'acquisition compressive, dans lesquelles la phase de compression est mise en oeuvre dans le domaine analogique, en amont du ou des convertisseurs analogique-numérique, combinée avec la phase d'acquisition. Les méthodes d'acquisition compressive permettent une acquisition et une compression simultanées de l'image en prévoyant, au lieu de lire et numériser une valeur de sortie représentative d'un niveau d'éclairement reçu par chaque pixel individuellement, d'effectuer une pluralité de mesures non-cohérentes basées chacune sur un support de mesure comportant plusieurs pixels du capteur, par exemple la totalité des pixels du capteur, ou un sous-ensemble de pixels du capteur. Chaque mesure est une somme pondérée des niveaux de luminosité reçus par les différents pixels d'un support de mesure. Les coefficients de pondération sont générés de façon aléatoire ou pseudo-aléatoire. Ces coefficients peuvent être binaires (0 ou 1), ce qui facilite la mise en oeuvre des opérations de sommation pondérée. Pour obtenir un effet de compression, le nombre total de mesures effectuées sur le capteur est inférieur au nombre total de pixels du capteur. Il est ainsi possible de réduire la durée d'acquisition de l'image et la consommation électrique liée à l'acquisition, notamment grâce au fait qu'une quantité moins importante de données est lue et numérisée par le capteur. En outre, les traitements de compression dans le domaine numérique, postérieurs à l'acquisition, peuvent être réduits ou supprimés.

L'image d'origine peut être reconstruite à partir de l'image compressée et de la matrice des coefficients de pondération utilisés lors de l'acquisition. Cette reconstruction exploite la parcimonie de l'image d'origine dans une base de décomposition particulière, par exemple dans une base en cosinus discrets ou dans une base d'ondelettes.

Les théories de l'acquisition compressive ont été exposées en détail dans diverses publications, par exemple dans l'article intitulé "An Introduction To Compressive Sensing" d'Emmanuel J. Candès et al.

Par ailleurs, des architectures de capteurs d'image CMOS utilisant l'acquisition compressive ont été décrites dans les articles intitulés "Block-Based Compressive Sensing in a CMOS Image Sensor", de M. R. Dadkhah et al., et "CMOS Image Sensor With Per-Column $\Sigma\Delta$ ADC and Programmable Compressed Sensing" de Yusuke Oike et al.

Il existe toutefois un besoin pour un capteur d'image CMOS adapté à mettre en oeuvre des méthodes d'acquisition compressive, ce capteur améliorant au moins en partie certains aspects des capteurs de l'art antérieur. En particulier, il existe un besoin pour un capteur CMOS présentant une plus grande vitesse d'acquisition des images, et/ou ayant une consommation électrique plus faible et/ou ayant un encombrement réduit par rapport aux capteurs CMOS de l'art antérieur utilisant l'acquisition compressive.

Des exemples de capteurs d'image CMOS sont par ailleurs décrits dans les documents US6417882 et CN102186025.

Résumé

Ainsi, un mode de réalisation prévoit un capteur d'image CMOS comportant: une pluralité de pixels répartis en plusieurs sous-ensembles, chaque sous ensemble définissant un support de mesure; et un circuit adapté à mettre en oeuvre un procédé d'acquisition compressive d'une image, ce procédé comprenant : pour une durée d'intégration donnée des pixels du capteur, lire, pour chaque support de mesure, une unique valeur de sortie basée sur les valeurs de sortie d'une sélection pseudo-aléatoire d'un ou plusieurs pixels du support.

Selon un mode de réalisation, lors de la mise en oeuvre du procédé d'acquisition compressive, les périodes d'intégration des pixels d'un même support de mesure coïncident dans le temps.

Selon un mode de réalisation, une valeur de sortie unique est représentative de la somme des valeurs de sortie des pixels du support sélectionnés.

Selon un mode de réalisation, tous les pixels d'un même support de mesure sont connectés à une même piste conductrice de sortie.

Selon un mode de réalisation, lors de la mise en oeuvre du procédé d'acquisition compressive, les pixels du capteur sont configurés de façon que, lorsque plusieurs pixels d'un même support sont activés simultanément en lecture, on puisse lire, sur la piste de sortie commune aux pixels du support, une grandeur représentative de la somme des valeurs de sortie des pixels activés.

Selon un mode de réalisation, la grandeur est un courant.

Selon un mode de réalisation, chaque piste de sortie du capteur est reliée à un circuit de lecture de la grandeur.

Selon un mode de réalisation, des pixels de supports de mesure distincts sont connectés à des pistes de sortie conductrices distinctes.

Selon un mode de réalisation, les pixels du capteur sont disposés selon une matrice, et tous les pixels d'un même support de mesure appartiennent à une même colonne de la matrice.

Selon un mode de réalisation, chaque colonne de la matrice comprend plusieurs supports de mesure distincts.

Selon un mode de réalisation, les pixels de chaque support de mesure sont régulièrement répartis sur toute la hauteur de la colonne à laquelle appartient le support.

Selon un mode de réalisation, tous les pixels d'une même colonne sont connectés à une même piste conductrice de sortie.

Selon un mode de réalisation, les pixels sont des pixels actifs comportant chacun un photodétecteur et un amplificateur de sortie actif comportant des transistors MOS.

Selon un mode de réalisation, chaque pixel comprend une photodiode et trois transistors MOS.

Selon un mode de réalisation, le capteur comprend un générateur de coefficients binaires pseudo-aléatoires, et un circuit de contrôle adapté à effectuer la sélection pseudo-aléatoire d'un ou plusieurs pixels du support sur la base des coefficients fournis par le générateur.

Selon un mode de réalisation, le générateur comprend un étage de réduction de son espérance de sortie.

Selon un mode de réalisation, le procédé d'acquisition compressive comprend, pour chaque support de mesure, la lecture d'au moins deux valeurs de sortie correspondant à des durées d'intégration distinctes des pixels du support, les pixels du support n'étant pas réinitialisés entre les deux lectures, de façon à permettre la reconstruction d'une image à grande gamme dynamique.

Un autre mode de réalisation prévoit un procédé d'acquisition compressive d'une image par un capteur d'image CMOS comportant une pluralité de pixels répartis en plusieurs sous-ensembles, chaque sous ensemble définissant un support de mesure, ce procédé comprenant: pour une durée d'intégration donnée des pixels du capteur, lire, pour chaque support de mesure, une unique valeur de sortie basée sur les valeurs de sortie d'une sélection pseudo-aléatoire d'un ou plusieurs pixels du support.

Selon un mode de réalisation, le procédé comprend, pour chaque support de mesure, la lecture d'au moins deux valeurs de sortie correspondant à des durées d'intégration distinctes des pixels du support, les pixels du support n'étant pas réinitialisés entre les deux lectures, de façon à permettre la reconstruction d'une image à grande gamme dynamique.

Selon un mode de réalisation, les périodes d'intégration des pixels d'un même support de mesure coïncident dans le temps.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles:

la figure 1 représente schématiquement, sous forme de blocs, un exemple d'un mode de réalisation d'un capteur d'image CMOS adapté à mettre en oeuvre des méthodes d'acquisition compressive ;

les figures 2A et 2B illustrent plus en détail le schéma électrique et le fonctionnement d'un exemple de réalisation d'un pixel du capteur de la figure 1 ;

la figure 3 est un chronogramme représentant l'évolution en fonction du temps de signaux internes au capteur de la figure 1, selon un exemple de fonctionnement de ce capteur ;

la figure 4 est un chronogramme représentant l'évolution en fonction du temps de signaux internes au capteur de la figure 1, selon un autre exemple de fonctionnement de ce capteur ; et

la figure 5 représente schématiquement, sous forme de blocs, un exemple d'un mode de réalisation d'un générateur de mots binaires pseudo-aléatoires susceptible d'être utilisé dans le capteur de la figure 1.

Description détaillée

Par souci de clarté, de mêmes éléments ont été désignés par de mêmes références aux différentes figures. De plus, seuls les éléments utiles à la compréhension des modes de réalisation décrits ci-après ont été détaillés. En particulier, les procédés et dispositifs susceptibles d'être utilisés pour reconstruire des images non compressées à partir d'images capturées en acquisition compressive n'ont pas été détaillés, les modes de réalisation de dispositifs et procédés d'acquisition compressive décrits ci-après étant compatibles avec les procédés et dispositifs de reconstruction usuels du domaine de l'acquisition compressive.

Classiquement, dans une architecture de capteur CMOS utilisant l'acquisition compressive, le capteur peut comprendre une matrice de pixels divisée en plusieurs sous-matrices de mêmes dimensions qui définissent des supports de mesure. Lors de l'acquisition d'une image, il est prévu d'effectuer plusieurs mesures distinctes sur chaque support de mesure, c'est-à-dire de calculer plusieurs sommes pondérées des valeurs de sortie des pixels du support, avec des jeux distincts de coefficients de pondération.

Pour cela, on peut prévoir, avant d'effectuer les mesures, de mémoriser temporairement un instantané ("snapshot" en anglais) des valeurs de sortie des pixels du support, de façon à pouvoir réaliser successivement les différentes mesures sur la base des mêmes valeurs de pixels. En effet, la valeur de sortie d'un pixel CMOS évolue généralement en permanence dans le temps, et la mémorisation d'un instantané permet de garantir que les différentes mesures effectuées sur un support donné soient basées sur les mêmes valeurs de sortie des pixels du support. Une solution de ce type est par exemple décrite dans l'article susmentionné intitulé "Block-Based Compressive Sensing in a CMOS Image Sensor", de M. R. Dadkhah et al.

Toutefois, un inconvénient de cette solution est que les circuits prévus pour mémoriser temporairement un instantané des valeurs analogiques de sortie des pixels du support augmentent l'encombrement et le coût du capteur, et présentent une consommation électrique non négligeable.

Alternativement, plutôt que de mémoriser un instantané des valeurs de sortie des pixels du support, on peut prévoir une architecture permettant de calculer en parallèle (simultanément) plusieurs sommations pondérées des valeurs de sortie des pixels du support, avec des coefficients de pondération différents. Une solution de ce type est par exemple décrite dans l'article susmentionné intitulé "CMOS Image Sensor With Per-Column $\Sigma\Delta$ ADC and Programmable Compressed Sensing" de Yusuke Oike et al.

Toutefois, un inconvénient de cette solution est qu'elle implique de dupliquer plusieurs fois certaines ressources, notamment les circuits mettant en oeuvre la sommation pondérée, les pistes de connexion entre les pixels du support et les circuits mettant en oeuvre la sommation pondérée, les pistes de connexion entre le générateur de coefficients de pondération et les circuits mettant en oeuvre la sommation pondérée, etc.

Plus généralement, un inconvénient des architectures existantes de capteurs CMOS mettant en oeuvre des techniques d'acquisition compressive, est qu'elles comportent, par rapport à des capteurs CMOS standard n'utilisant pas l'acquisition compressive, des circuits supplémentaires augmentant de façon significative l'encombrement et/ou la consommation électrique du capteur, ce qui réduit au moins en partie les bénéfices procurés par l'acquisition compressive.

Par ailleurs, dans certaines applications, il serait souhaitable de pouvoir réduire davantage la durée d'acquisition des images par rapport aux architectures existantes de capteurs CMOS utilisant l'acquisition compressive.

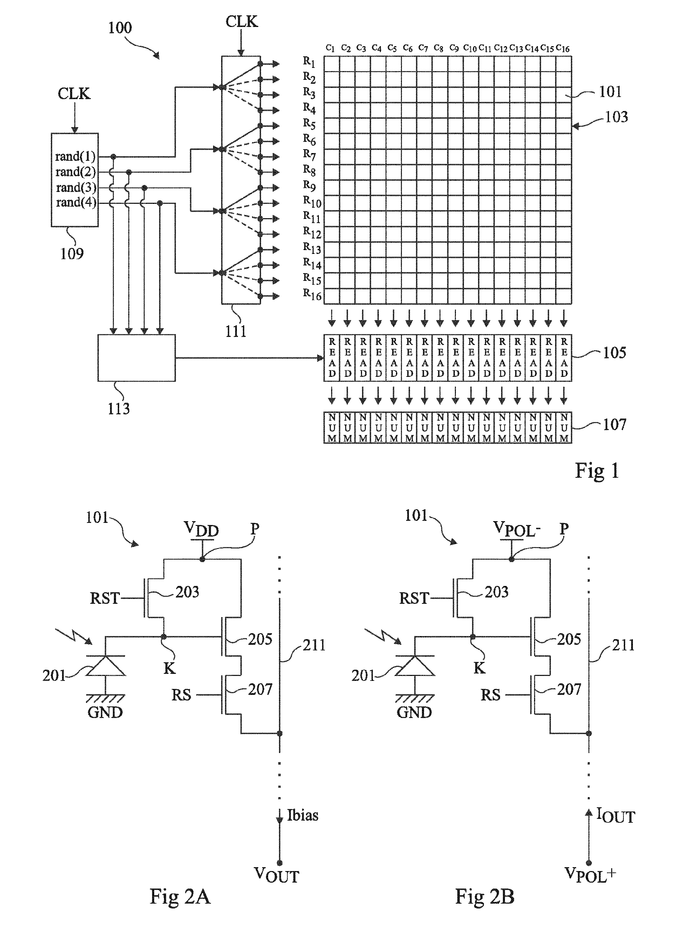

La figure 1 représente schématiquement, sous forme de blocs, un exemple d'un mode de réalisation d'un capteur d'image CMOS 100 adapté à mettre en oeuvre des méthodes d'acquisition compressive. On notera que dans cet exemple, le capteur 100 est adapté à mettre en oeuvre non seulement des méthodes d'acquisition compressive, mais aussi des méthodes d'acquisition d'une image complète non compressée.

Le capteur 100 comprend une pluralité de pixels 101 identiques disposés selon une matrice 103. Dans l'exemple de la figure 1, donné à titre explicatif, la matrice 103 comprend 16 lignes référencées $R_1$ à $R_{16}$ (de haut en bas dans l'orientation de la figure) et 16 colonnes référencées $C_1$ à $C_{16}$ (de gauche à droite dans l'orientation de la figure), soit 256 pixels. Les modes de réalisation décrits ci-après sont bien entendu compatibles avec des matrices de dimensions différentes.

Selon un aspect des modes de réalisation décrits, les pixels du capteur sont des pixels actifs, c'est-à-dire que chaque pixel comprend un photodétecteur et un amplificateur de sortie actif à base de transistors MOS. La prévision d'un capteur à pixels actifs présente notamment l'avantage de permettre l'acquisition d'images faiblement bruitées par rapport à un capteur à pixels passifs (c'est-à-dire un capteur dans lequel chaque pixel comprend un photodétecteur mais ne comprend pas son propre amplificateur de sortie).

Les figures 2A et 2B représentent plus en détail le schéma électrique d'un exemple de réalisation préféré d'un pixel 101 du capteur 100. La figure 2A représente le pixel 101 lorsque le capteur est configuré pour mettre en oeuvre un exemple de procédé d'acquisition d'une image complète non compressée, et la figure 2B représente le même pixel 101 lorsque le capteur est configuré pour mettre en oeuvre un exemple de procédé d'acquisition compressive d'une image.

Le pixel 101 des figures 2A et 2B est un pixel du type couramment désigné dans la technique par l'appellation pixel 3T, c'est-à-dire comprenant un photodétecteur, une photodiode 201 dans cet exemple, et trois transistors MOS, des transistors à canal N 203, 205 et 207 dans cet exemple. L'anode de la photodiode 201 est reliée à un noeud de potentiel de référence bas GND du capteur, par exemple la masse, et la cathode de la photodiode 201 est reliée à un noeud d'accumulation K du pixel. Le transistor 203, ou transistor de réinitialisation, relie le noeud K à un noeud P d'application d'un potentiel de polarisation du pixel, et les transistors 205 et 207 relient le noeud K à une piste de sortie 211 du pixel, commune à plusieurs pixels du capteur. Le transistor 205 a sa grille connectée au noeud K, un premier noeud de conduction (source ou drain selon la polarisation appliquée) connecté au noeud P, et un deuxième noeud de conduction (drain ou source selon la polarisation appliquée) relié à la piste de sortie 211 par l'intermédiaire du transistor 207 ou transistor de lecture. En fonctionnement, le pixel 101 reçoit des signaux de commande RST et RS appliqués respectivement sur les grilles des transistors 203 et 207.

Lors d'une phase de réinitialisation du pixel, le transistor 203 peut être rendu passant (signal RST à un état haut dans cet exemple), ce qui entraîne la réinitialisation du potentiel du noeud K au potentiel du noeud P.

Pendant une phase d'intégration du pixel 101 (suivant une phase de réinitialisation), les transistors 203 et 207 peuvent être maintenus non passants (signaux RST et RS à un état bas dans cet exemple) de façon à isoler le noeud d'accumulation K. Les charges électriques générées dans la photodiode 201 sous l'effet de la lumière entraînent alors une diminution progressive du potentiel du noeud K.

Lors d'une phase d'acquisition d'une valeur de sortie du pixel (à la fin d'une phase d'intégration), le transistor 203 peut être maintenu non passant (signal RST à l'état bas) et le transistor 207 peut être rendu passant (signal RS à l'état haut), de façon à permettre la lecture d'une valeur représentative du potentiel du noeud K sur la piste de sortie 211 du pixel.

Dans l'exemple de la figure 2A, lorsque le capteur 100 est configuré pour mettre en oeuvre l'acquisition d'une image complète non compressée, on prévoit de configurer les pixels 101 pour permettre une lecture en tension des valeurs de sortie des pixels sur la ou les pistes de sortie 211 du capteur. Pour cela, dans chaque pixel, le noeud P est mis à un potentiel de référence haut $V_{DD}$, supérieur au potentiel de référence bas GND, par exemple un potentiel d'alimentation haute du capteur, et la piste de sortie 211 du pixel est couplée, via un circuit de polarisation non représenté, à un potentiel de référence bas, par exemple le potentiel GND. Le transistor 205 fonctionne alors en source suiveuse. Les variations de potentiel du noeud K sont reportées sur le noeud commun aux transistors 205 et 207, et, lorsque le transistor 207 est à l'état passant, sur la piste de sortie 211 du pixel. L'acquisition d'une valeur de sortie du pixel se fait par la lecture du potentiel $V_{OUT}$ de la piste de sortie 211.

Dans l'exemple de la figure 2B, lorsque le capteur 100 est configuré pour mettre en oeuvre un procédé d'acquisition compressive d'une image, on prévoit de configurer les pixels 101 du capteur pour permettre une lecture en courant des valeurs de sortie des pixels sur la ou les pistes de sortie 211 du capteur. Pour cela, dans chaque pixel, le noeud P est mis à un premier potentiel de polarisation $V_{POL-}$, et la piste de sortie 211 du pixel est couplée à un deuxième potentiel de polarisation $V_{POL+}$ supérieur au potentiel $V_{POL-}$. Les potentiels $V_{POL-}$ et $V_{POL+}$ sont par exemple tous les deux compris entre le potentiel GND et le potentiel $V_{DD}$. Lorsque le transistor 207 du pixel est à l'état passant, et si les transistors 207 des autres pixels du capteur connectés à la même piste de sortie 211 sont à l'état bloqué, le courant $I_{OUT}$ circulant dans la piste de sortie 211 du pixel est représentatif du potentiel du noeud K du pixel. L'acquisition d'une valeur de sortie du pixel peut se faire par la lecture du courant $I_{OUT}$ circulant dans la piste de sortie 211 du pixel. Si plusieurs pixels partageant une même piste de sortie 211 sont activés en lecture simultanément (c'est-à-dire si leurs transistors de lecture 207 sont rendus passants simultanément), le courant $I_{OUT}$ dans la piste 211 est représentatif de la somme des potentiels des noeuds K de ces pixels.

Selon un aspect des modes de réalisation décrits, comme cela sera expliqué plus en détail ci-après à l'aide d'exemples de réalisation particuliers non limitatifs, on prévoit, lors de la mise en oeuvre de l'acquisition compressive d'une image, d'utiliser comme supports de mesure des groupes de pixels partageant une même piste conductrice de sortie 211, les pixels étant configurés de sorte que, lorsque plusieurs pixels du support sont activés simultanément en lecture, il soit possible de lire, sur la piste de sortie 211 commune aux pixels du support, une grandeur analogique représentative de la somme des valeurs de sortie des pixels activés en lecture.

Un avantage est que ceci permet d'effectuer des sommations d'acquisition compressive sans aucun circuit de sommation supplémentaire par rapport à un capteur CMOS standard n'utilisant pas l'acquisition compressive.

Dans l'exemple décrit en relation avec la figure 2B, les pixels sont configurés pour permettre une lecture en courant de leurs valeurs de sortie sur la piste 211, et la grandeur analogique représentative de la somme des valeurs de sortie des pixels activés simultanément est un courant. On notera toutefois que d'autres modes de lecture permettant la sommation automatique des valeurs de sortie des pixels sur la piste de sortie 211 des pixels du support peuvent être envisagés. Par exemple, les pixels peuvent être configurés pour une lecture en charges.

Dans l'exemple des figures 2A et 2B, le passage de la configuration d'acquisition d'une image complète non compressée à la configuration d'acquisition compressive peut être effectué en ne jouant que sur des commandes à l'extérieur de la matrice de pixels. Cet exemple de réalisation permet de préserver les investissements nécessaires à la mise au point d'un pixel CMOS, déjà effectués dans le domaine des capteurs CMOS n'utilisant pas l'acquisition compressive.

A titre de variante, on peut prévoir, dans le mode de fonctionnement n'utilisant pas l'acquisition compressive, de configurer les pixels pour permettre un mode de lecture autre qu'une lecture en tension, par exemple une lecture en courant ou une lecture en charges.

On notera que lorsque les pixels du capteur sont configurés pour une lecture en courant, la relation entre le courant de sortie $I_{OUT}$ d'un pixel du capteur et l'intensité lumineuse reçue par ce pixel, ou réponse du pixel, peut être soit linéaire, soit non linéaire, en fonction des caractéristiques des transistors du pixel et des niveaux de polarisation. Les méthodes d'acquisition compressive proposées sont compatibles avec les deux types de réponse (linéaire ou non-linéaire). On notera en particulier que des algorithmes connus de reconstruction d'images non compressées à partir d'images capturées en acquisition compressive, sont adaptés à tenir compte d'une éventuelle non-linéarité de la réponse des pixels.

Selon un autre aspect des modes de réalisation décrits, comme cela sera expliqué plus en détail ci-après à l'aide d'exemples de réalisation particuliers non limitatifs, on prévoit, lors de la mise en oeuvre de l'acquisition compressive d'une image, d'effectuer, pour un temps d'intégration donné des pixels du capteur, une unique mesure par support, au lieu de plusieurs mesures comme le prévoient les architectures et procédés d'acquisition compressive de l'art antérieur.

Un avantage est que ceci permet de ne pas avoir à mémoriser un instantané des valeurs de sortie des pixels du support, et de ne pas avoir besoin de prévoir des circuits et/ou routages supplémentaires pour réaliser en parallèle plusieurs sommations pondérées des valeurs de sortie des pixels du support.

Un autre avantage est que ceci permet d'obtenir une vitesse d'acquisition particulièrement élevée de l'image compressée.

Dans la suite, on considérera à titre d'exemple de réalisation explicatif non limitatif que, dans le capteur 100 de la figure 1, les sorties des pixels d'une même colonne de la matrice 103 sont connectées à une même piste de sortie 211, et les sorties des pixels de colonnes distinctes de la matrice 103 sont connectées à des pistes de sortie 211 distinctes. De plus, on considèrera dans cet exemple que les pixels du capteur 100 sont commandables simultanément par ligne, c'est-à-dire que dans chaque ligne de pixels de la matrice 103, les grilles des transistors 203 des pixels de la ligne sont connectées à une même piste conductrice (non représentée) recevant un signal de commande RST commun à tous les pixels de la ligne, et les grilles des transistors 207 des pixels de la ligne sont connectées à une même piste conductrice (non représentée) recevant un signal de commande RS commun à tous les pixels de la ligne.

Au pied de chaque colonne de la matrice 103, est prévu un circuit de lecture (READ) adapté à lire une valeur analogique de sortie sur la piste 211 commune aux pixels de la colonne. Dans cet exemple, chaque circuit de lecture (READ) est configurable pour lire la valeur de sortie soit en tension (dans le cas d'une acquisition non compressive - figure 2A) soit en courant (dans le cas d'une acquisition compressive - figure 2B). Les circuits de lecture forment ensemble un étage de lecture 105 du capteur. Dans l'exemple de la figure 1, le capteur 100 comporte en outre, en aval de chaque circuit de lecture (READ), un circuit de numérisation (NUM) des valeurs analogiques lues par le circuit de lecture. Les circuits de numérisation, disposés respectivement au pied des colonnes $C_1$ à $C_{16}$, forment ensemble un étage de numérisation 107 du capteur.

Dans cet exemple, lors de l'acquisition compressive d'une image, on prévoit d'utiliser comme supports de mesure des groupes de pixels appartenant à une même colonne du capteur. Les différents supports de mesure utilisés lors d'une acquisition ont de préférence tous le même nombre de pixels. Chaque support de mesure peut comprendre soit la totalité des pixels d'une colonne, soit un sous-ensemble de pixels d'une colonne. Dans l'exemple de la figure 1, chaque colonne est divisée en quatre supports de mesure comportant chacun quatre pixels régulièrement répartis sur toute la hauteur de la colonne. Plus particulièrement, dans l'exemple représenté, chaque colonne comprend un premier support de mesure constitué par les pixels des lignes R1, R5, R9 et R13, un deuxième support de mesure constitué par les pixels des lignes R2, R6, R10 et R14, un troisième support de mesure constitué par les pixels des lignes R3, R7, R11 et R15, et un quatrième support de mesure constitué par les pixels des lignes R4, R8, R12 et R16.

Le capteur 100 comprend un circuit 109 adapté à générer de façon pseudo-aléatoire des jeux de coefficients de pondération binaires à appliquer aux supports de mesure lors d'une acquisition compressive. Dans cet exemple, le générateur pseudo-aléatoire 109 reçoit un signal d'horloge CLK, et est adapté à générer périodiquement (à la fréquence du signal CLK) un mot pseudo-aléatoire rand de quatre coefficients binaires rand(1), rand(2), rand(3) et rand(4). Plus généralement, on peut prévoir de dimensionner le générateur pseudo-aléatoire pour générer des mots de coefficients binaires comportant un nombre de coefficients égal au nombre de pixels des supports de mesure utilisés lors de l'acquisition compressive. L'utilisation d'un générateur pseudo-aléatoire, c'est-à-dire ayant un comportement prédictif, présente l'avantage de permettre, au moment de la reconstruction de l'image d'origine, de pouvoir générer une deuxième fois les mêmes coefficients que ceux qui ont été utilisés lors de l'acquisition compressive. On peut ainsi reconstruire l'image d'origine sans avoir à transmettre en même temps que l'image compressée les coefficients de pondération utilisés lors de l'acquisition.

Selon un aspect avantageux car particulièrement simple à mettre en oeuvre des modes de réalisation décrits, les coefficients binaires générés par le générateur pseudo-aléatoire 109 sont directement utilisés comme signaux d'activation (ou de non-activation) des lignes de pixels de la matrice 103.

Dans l'exemple de la figure 1, le capteur 100 comprend un démultiplexeur séquentiel 111 recevant le même signal d'horloge CLK que le générateur pseudo-aléatoire 109, adapté à appliquer successivement aux différents supports de mesure du capteur différents mots rand de coefficients de pondération générés par le générateur 109. Dans cet exemple, le démultiplexeur 111 comprend quatre entrées reliées respectivement aux sorties rand(1), rand(2), rand(3) et rand(4) du générateur pseudo-aléatoire 109, et seize sorties reliées respectivement aux lignes R1 à R16 de la matrice 103. Le démultiplexeur 111 est par exemple configuré pour appliquer successivement quatre mots rand distincts aux quatre groupes de quatre lignes susmentionnés définissant les supports de mesure du capteur. L'architecture de la figure 1 permet de lire simultanément (en parallèle) une mesure par colonne de la matrice 103.

On notera qu'il peut être utile au niveau de l'étage de lecture 105 de connaître, à chaque mesure effectuée sur le capteur, le nombre de pixels du support de mesure qui ont été simultanément activés en lecture. Ceci permet notamment de pouvoir normaliser les différentes mesures effectuées sur le capteur, par exemple en appliquant à chaque mesure un gain inversement proportionnel au nombre de pixels du support activés lors de la mesure. Dans cet exemple, le capteur 100 comprend un circuit additionneur 113 recevant les valeurs de sortie rand(1), rand(2), rand(3) et rand(4) du générateur pseudo-aléatoire 109 et additionnant ces valeurs pour fournir à l'étage de sortie 105 une valeur égale au nombre de pixels activés en lecture simultanément sur le support de mesure.

Un avantage des modes de réalisation décrits en relation avec les figures 1, 2A et 2B est que l'architecture proposée présente très peu de modifications structurelles par rapport à un capteur CMOS standard n'utilisant pas l'acquisition compressive. En particulier, la structure interne de la matrice de pixels est inchangée. De plus, le capteur ne comprend aucun circuit spécifiquement dédié à la sommation de valeurs de sorties de plusieurs pixels du capteur, les sommations étant effectuées directement sur les pistes de sortie 211 du capteur.

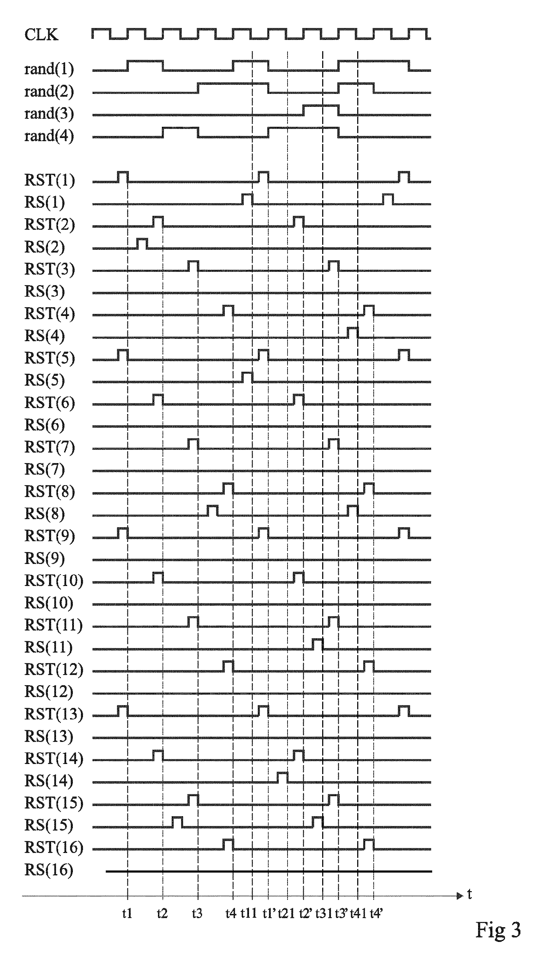

La figure 3 est un chronogramme illustrant plus en détail un exemple de procédé d'acquisition compressée susceptible d'être mis en oeuvre par le capteur 100 de la figure 1. La figure 3 représente l'évolution, en fonction du temps, du signal d'horloge CLK du générateur pseudo-aléatoire 109, des signaux de sortie rand(i), avec i entier allant de 1 à 4 dans cet exemple, du générateur pseudo-aléatoire 109, et des signaux de commande en réinitialisation RST(j) et en lecture RS(j), avec j entier allant de 1 à 16 dans cet exemple, des pixels des lignes Rj de la matrice 103.

Comme cela apparaît sur la figure, à chaque front montant du signal CLK, le mot rand généré par le générateur pseudo-aléatoire 109 est mis à jour.

A un instant t1, une phase d'intégration des pixels des lignes $R_1$, $R_5$, $R_9$ et $R_{13}$ du capteur débute. Cette phase d'intégration est précédée d'une phase de réinitialisation de ces pixels par application d'une impulsion positive sur les commandes RST(1), RST(5), RST(9) et RST(13). L'instant t1 coïncide avec le front descendant de l'impulsion de réinitialisation.

A un instant t2 postérieur à l'instant t1, une phase d'intégration des pixels des lignes $R_2$, $R_6$, $R_{10}$ et $R_{14}$ débute, précédée d'une phase de réinitialisation de ces pixels par application d'une impulsion positive sur les commandes RST(2), RST(6), RST (10) et RST(14). L'instant t2 coïncide avec le front descendant de l'impulsion de réinitialisation.

A un instant t3 postérieur à l'instant t2, une phase d'intégration des pixels des lignes $R_3$, $R_7$, $R_{11}$ et $R_{15}$ débute, précédée d'une phase de réinitialisation de ces pixels par application d'une impulsion positive sur les commandes RST(3), RST(7), RST (11) et RST(15). L'instant t3 coïncide avec le front descendant de l'impulsion de réinitialisation.

A un instant t4 postérieur à l'instant t3, une phase d'intégration des pixels des lignes $R_4$, $R_8$, $R_{12}$ et $R_{16}$ débute, précédée d'une phase de réinitialisation de ces pixels par application d'une impulsion positive sur les commandes RST(4), RST(8), RST(12) et RST(16). L'instant t4 coïncide avec le front descendant de l'impulsion de réinitialisation.

Ainsi, à l'échelle d'une colonne, dans chaque support de mesure, les phases d'intégration des pixels du support démarrent simultanément, et les phases d'intégration de pixels de supports distincts démarrent en décalage. Ce décalage permet, à la fin de l'intégration, de pouvoir lire successivement, sur la piste de sortie 211 commune à tous les pixels de la colonne, les valeurs de sortie des différents supports de mesure de la colonne, avec un même temps d'intégration pour tous les pixels de la colonne.

A un instant t11 postérieur à l'instant t1, correspondant à la fin d'une phase d'intégration du premier support, une valeur de sortie est lue sur chaque piste de sortie de colonne 211 du capteur. Dans chaque colonne, la valeur de sortie lue est représentative de la somme, pondérée par les coefficients rand(1), rand(2), rand(3) et rand(4), des valeurs de sortie des pixels de la colonne situés sur les lignes $R_1$, $R_5$, $R_9$ et $R_{13}$ respectivement. Pour cela, l'activation en lecture des lignes $R_1$, $R_5$, $R_9$ et $R_{13}$ est conditionnée à la valeur des coefficients rand(1), rand(2), rand(3) et rand(4) respectivement. Dans l'exemple représenté, à l'instant t11, les signaux rand(1) et rand(2) sont à l'état haut, et les signaux rand(3) et rand(4) sont à l'état bas. Les lignes $R_1$ et $R_5$ sont donc simultanément activées en lecture, par application d'une impulsion positive sur les commandes RS(1) et RS(5), et les autres lignes du capteur sont désactivées (signaux RS(j) correspondants à l'état bas).

A un instant t1', postérieur à l'instant t11, les lignes $R_1$, $R_5$, $R_9$ et $R_{13}$ peuvent être réinitialisées par application d'une impulsion positive sur les commandes RST(1), RST(5), RST(9) et RST(13), et une nouvelle phase d'intégration peut démarrer en vue de l'acquisition d'une nouvelle image.

A un instant t21 postérieur à l'instant t2, correspondant à la fin d'une phase d'intégration du deuxième support, une valeur de sortie est lue sur chaque piste de sortie de colonne 211 du capteur, représentative de la somme, pondérée par les coefficients rand(1), rand(2), rand(3) et rand(4), des valeurs de sortie des pixels de la colonne situés sur les lignes $R_2$, $R_6$, $R_{10}$ et $R_{14}$ respectivement. Dans l'exemple représenté, à l'instant t21, les signaux rand(1), rand(2) et rand(3) sont à l'état bas, et le signal rand(4) est à l'état haut. Seule la ligne $R_{14}$ est donc activée en lecture, par application d'une impulsion positive sur la commande RS(14), et les autres lignes du capteur sont désactivées (signaux RS(j) correspondants à l'état bas).

A un instant t2', postérieur à l'instant t21, les lignes $R_2$, $R_6$, $R_{10}$ et $R_{14}$ peuvent être réinitialisées par application d'une impulsion positive sur les commandes RST(2), RST(6), RST(10) et RST(14), et une nouvelle phase d'intégration peut démarrer en vue de l'acquisition d'une nouvelle image.

A un instant t31 postérieur à l'instant t3, correspondant à la fin d'une phase d'intégration du troisième support, une valeur de sortie est lue sur chaque piste de sortie de colonne 211 du capteur, représentative de la somme, pondérée par les coefficients rand(1), rand(2), rand(3) et rand(4), des valeurs de sortie des pixels de la colonne situés sur les lignes $R_3$, $R_7$, $R_{11}$ et $R_{15}$ respectivement. Dans l'exemple représenté, à l'instant t31, les signaux rand(1) et rand(2) sont à l'état bas, et les signaux rand(3) et rand(4) sont à l'état haut. Les lignes $R_{11}$ et $R_{15}$ sont donc simultanément activées en lecture, par application d'une impulsion positive sur les commandes RS(11) et RS(15), et les autres lignes du capteur sont désactivées (signaux RS(j) correspondants à l'état bas).

A un instant t3', postérieur à l'instant t31, les lignes $R_3$, $R_7$, $R_{11}$ et $R_{15}$ peuvent être réinitialisées par application d'une impulsion positive sur les commandes RST(3), RST(7), Rut (11) et RST(15), et une nouvelle phase d'intégration peut démarrer en vue de l'acquisition d'une nouvelle image.

A un instant t41 postérieur à l'instant t4, correspondant à la fin d'une phase d'intégration du quatrième support, une valeur de sortie est lue sur chaque piste de sortie de colonne 211 du capteur, représentative de la somme, pondérée par les coefficients rand(1), rand(2), rand(3) et rand(4), des valeurs de sortie des pixels de la colonne situés sur les lignes $R_4$, $R_8$, $R_{12}$ et $R_{16}$ respectivement. Dans l'exemple représenté, à l'instant t41, les signaux rand(1) et rand(2) sont à l'état haut, et les signaux rand(3) et rand(4) sont à l'état bas. Les lignes $R_4$ et $R_8$ sont donc simultanément activées en lecture, par application d'une impulsion positive sur les commandes RS(11) et RS(15), et les autres lignes du capteur sont désactivées (signaux RS(j) correspondants à l'état bas).

A un instant t4', postérieur à l'instant t41, les lignes $R_4$, $R_8$, $R_{12}$ et $R_{16}$ peuvent être réinitialisées par application d'une impulsion positive sur les commandes RST(4), RST(8), RST(12) et RST(16), et une nouvelle phase d'intégration peut démarrer en vue de l'acquisition d'une nouvelle image.

Dans l'exemple de la figure 3, les différents instants susmentionnés se présentent dans l'ordre suivant: t1, t2, t3, t4, t11, t1', t21, t2', t31, t3', t41, t4', avec t11-t1 = t21-t2 = t31-t3 = t41-t4. Les modes de réalisation décrits ne se limitent toutefois pas à cette séquence particulière.

Dans l'exemple de la figure 3, chaque colonne du capteur est divisée en quatre supports de mesure, et, lors de l'acquisition d'une image, pour chaque support de mesure, une et une seule valeur de sortie est lue et numérisée. Il en résulte une diminution (compression) de la quantité de données en sortie du capteur par un facteur quatre par rapport à une acquisition d'une image complète (une valeur de sortie par pixel). Il en résulte de plus une diminution par un facteur quatre du temps d'acquisition de l'image (lecture et numérisation de l'ensemble des valeurs de sortie) par rapport à une acquisition d'une image complète avec lecture des pixels ligne par ligne.

Un tel procédé d'acquisition présente l'avantage d'augmenter de façon significative la vitesse d'acquisition des images par rapport aux architectures de l'art antérieur utilisant l'acquisition compressive. Ceci présente un intérêt tout particulier pour des applications d'imagerie rapide pour lesquelles le temps d'acquisition est un paramètre critique. En particulier, les modes de réalisation décrits dans la présente demande sont particulièrement adaptés à la détection de phénomènes transitoires lorsque les contraintes en termes de résolution temporelle de détection et de consommation électrique sont importantes. Un autre avantage des modes de réalisation décrits dans la présente demande est qu'ils permettent, lors de l'acquisition d'une séquence vidéo, d'intercaler aisément des trames (images) non compressées dans la séquence, ce qui peut faciliter la reconstruction des images compressées.

Un autre aspect important des modes de réalisation décrits dans la présente demande est que, lors de l'acquisition compressive d'une image, tous les pixels d'un même support de mesure sont initialisés au même instant, c'est-à-dire que les périodes d'intégration des pixels d'un même support coïncident. Ceci a pour avantage de donner une consistance temporelle aux mesures, ce qui est par exemple particulièrement avantageux lorsque la scène observée est en mouvement. Ceci constitue une différence par rapport aux architectures et procédés d'acquisition compressive de l'art antérieur, dans lesquelles les pixels d'un même support de mesure sont intégrés pendant des durées identiques mais décalées temporellement les unes par rapport aux autres.

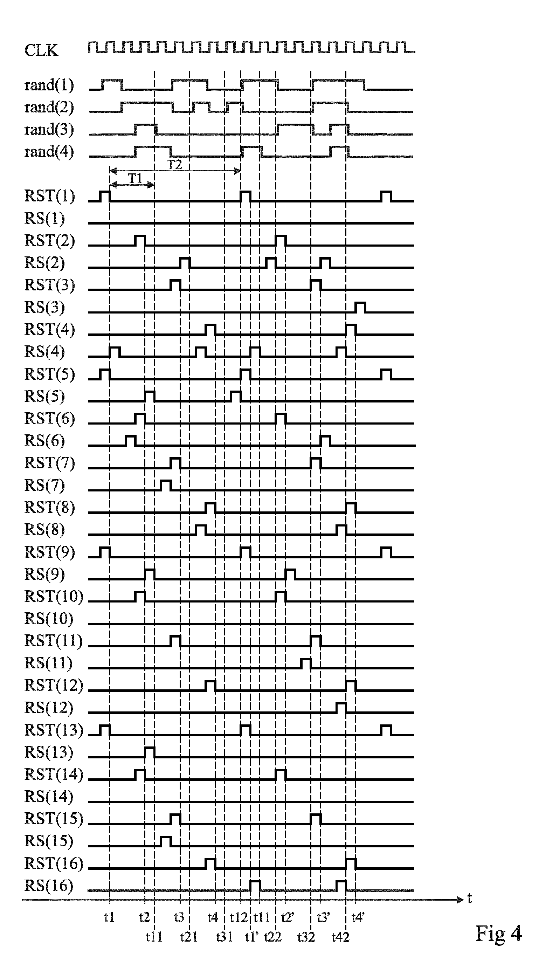

La figure 4 est un chronogramme illustrant un autre exemple de procédé d'acquisition compressive susceptible d'être mis en oeuvre par le capteur 100 de la figure 1. La figure 4 représente l'évolution, en fonction du temps, du signal d'horloge CLK du générateur pseudo-aléatoire 109, des signaux de sortie rand(i), avec i entier allant de 1 à 4 dans cet exemple, du générateur pseudo-aléatoire 109, et des signaux de commande en réinitialisation RST(j) et en lecture RS(j), avec j entier allant de 1 à 16 dans cet exemple, des pixels des lignes Rj de la matrice 103.

Dans cet exemple, on prévoit, lors de l'acquisition d'une image, de lire et numériser, pour chaque support de mesure, plusieurs valeurs de sortie (deux dans l'exemple représenté mais ce nombre pourrait être supérieur) correspondant à des temps d'intégration distincts des pixels du support, sans réinitialiser le support entre deux lectures successives.

Comme dans l'exemple de la figure 3, une phase d'intégration des pixels des lignes $R_1$, $R_5$, $R_9$ et $R_{13}$ du capteur débute à un instant t1, une phase d'intégration des pixels des lignes $R_2$, $R_6$, $R_{10}$ et $R_{14}$ débute à un instant t2 postérieur à l'instant t1, une phase d'intégration des pixels des lignes $R_3$, $R_7$, $R_{11}$ et $R_{15}$ débute à un instant t3 postérieur à l'instant t2, et une phase d'intégration des pixels des lignes $R_4$, $R_8$, $R_{12}$ et $R_{16}$ débute à un instant t4 postérieur à l'instant t3.

A un instant t11 postérieur à l'instant t1, une valeur de sortie correspondant à une première durée d'intégration T1 (T1 = t11 - t1) est lue sur chaque piste de sortie de colonne 211 du capteur. Dans chaque colonne, la valeur lue est représentative de la somme, pondérée par les coefficients rand(1), rand(2), rand(3) et rand(4), des valeurs de sortie des pixels de la colonne situés sur les lignes $R_1$, $R_5$, $R_9$ et $R_{13}$ respectivement. Dans l'exemple représenté, à l'instant t11, le signal rand(1) est à l'état bas, et les signaux rand(2), rand(3) et rand(4) sont à l'état haut. Les lignes $R_5$, $R_9$ et $R_{13}$ sont donc simultanément activées en lecture, par application d'une impulsion positive sur les commandes RS(5), RS(9) et RS(13), et les autres lignes sont désactivées (signaux RS(j) correspondants à l'état bas).

A un instant t12 postérieur à l'instant t11, une autre valeur de sortie correspondant à une deuxième durée d'intégration T2 (T2 = t12 - t1) est lue sur chaque piste de sortie de colonne 211 du capteur, représentative de la somme, pondérée par les coefficients rand(1), rand(2), rand(3) et rand(4), des valeurs de sortie des pixels de la colonne situés sur les lignes $R_1$, $R_5$, $R_9$ et $R_{13}$ respectivement. Dans l'exemple représenté, à l'instant t12, le signal rand(2) est à l'état haut, et les signaux rand(1), rand(3) et rand(4) sont à l'état bas. Seule la ligne $R_5$ est donc activée en lecture, par application d'une impulsion positive sur la commande RS(5), et les autres lignes du capteur sont désactivées (signaux RS(j) correspondants à l'état bas). Entre les instants t1 et t12, les lignes $R_1$, $R_5$, $R_9$ et $R_{13}$ ne sont pas réinitialisées.

A un instant t1', postérieur à l'instant t12, les lignes $R_1$, $R_5$, $R_9$ et $R_{13}$ peuvent être réinitialisées par application d'une impulsion positive sur les commandes RST(1), RST(5), RST(9) et RST(13), et une nouvelle phase d'intégration peut démarrer en vue de l'acquisition d'une nouvelle image.

De la même façon :

- A des instants t21, postérieur à l'instant t2, et t22, postérieur à l'instant t21, des valeurs de sortie des supports formés par les lignes $R_2$, $R_6$, $R_{10}$ et $R_{14}$ sont lues sur les pistes de sortie de colonne 211 du capteur, ces valeurs correspondant respectivement à la première durée d'intégration T1 (t21 = t2 + T1) et à la deuxième durée d'intégration T2 (t22 = t2 + T2), et les lignes $R_2$, $R_6$, $R_{10}$ et $R_{14}$ n'étant pas réinitialisées entre les instants t2 et t22. A un instant t2' postérieur à l'instant t22, les lignes $R_2$, $R_6$, $R_{10}$ et $R_{14}$ peuvent être réinitialisées en vue de l'intégration d'une nouvelle image.
- A des instants t31, postérieur à l'instant t3, et t32, postérieur à l'instant t31, des valeurs de sortie des supports formés par les lignes $R_3$, $R_7$, $R_{11}$ et $R_{15}$ sont lues sur les pistes de sortie de colonne 211 du capteur, ces valeurs correspondant respectivement à la première durée d'intégration T1 (t31 = t3 + T1) et à la deuxième durée d'intégration T2 (t32 = t3 + T2), et les lignes $R_3$, $R_7$, $R_{11}$ et $R_{15}$ n'étant pas réinitialisées entre les instants t3 et t32. A un instant t3' postérieur à l'instant t32, les lignes $R_3$, $R_7$, $R_{11}$ et $R_{15}$ peuvent être réinitialisées en vue de l'intégration d'une nouvelle image.
- A des instants t41, postérieur à l'instant t4, et t42, postérieur à l'instant t41, des valeurs de sortie des supports formés par les lignes $R_4$, $R_8$, $R_{12}$ et $R_{16}$ sont lues sur les pistes de sortie de colonne 211 du capteur, ces valeurs correspondant respectivement à la première durée d'intégration T1 (t41 = t4 + T1) et à la deuxième durée d'intégration T2 (t42 = t4 + T2), et les lignes $R_4$, $R_8$, $R_{12}$ et $R_{16}$ n'étant pas réinitialisées entre les instants t4 et t42. A un instant t4' postérieur à l'instant t42, les lignes $R_4$, $R_8$, $R_{12}$ et $R_{16}$ peuvent être réinitialisées en vue de l'intégration d'une nouvelle image.

Dans l'exemple de la figure 4, les différents instants susmentionnés se présentent dans l'ordre suivant : t1, t2, t11, t3, t21, t4, t31, t12, t1', t41, t22, t2', t32, t3', t42, t4'. Les modes de réalisation décrits ne se limitent toutefois pas à cette séquence particulière.

Le mode de réalisation décrit en relation avec la figure 4 permet, en prévoyant d'effectuer plusieurs mesures à des temps d'intégration différents, de reconstruire des images à grande gamme dynamique. Ceci présente un intérêt tout particulier dans le cas de scènes fortement contrastées. On notera que si, lors d'une mesure, des pixels saturés du support de mesure sont activés en lecture, ces pixels saturés produisent un courant nul sur la piste de sortie 211 du support, et n'ont donc pas d'effet sur la mesure. Ainsi, les pixels saturés sont automatiquement exclus de la mesure, ce qui a pour avantage de faciliter la reconstruction d'images à grande gamme dynamique. On notera par ailleurs que les procédés de reconstructions d'images à grande dynamique peuvent, le cas échéant, tirer profit d'une éventuelle non-linéarité de la réponse des pixels pour étendre la gamme dynamique de l'image reconstruite.

Un avantage du mode de réalisation de la figure 4 est qu'il peut permettre de se passer d'une boucle de rétroaction sur le temps d'intégration. On peut notamment tirer profit du relâchement des contraintes sur la conversion analogique-numérique et sur les circuits de lecture pour acquérir en mode compressé plusieurs images issues de temps d'intégration différents.

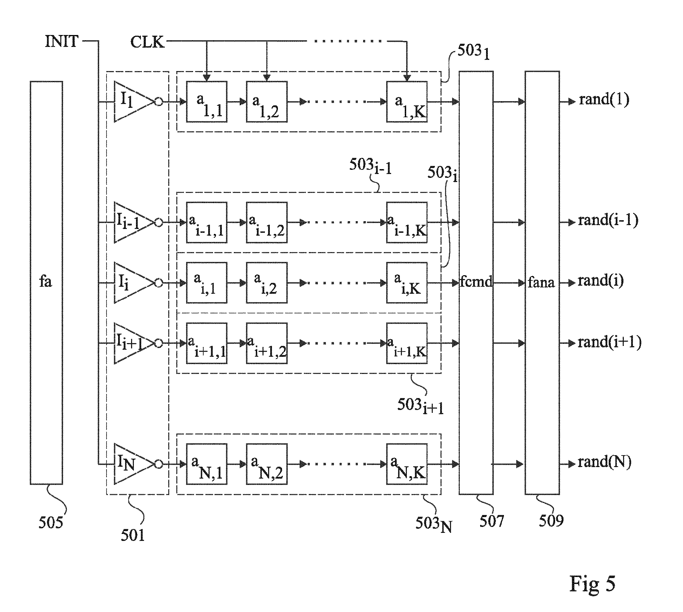

La figure 5 représente schématiquement un exemple d'un mode de réalisation d'un générateur de mots binaires pseudo-aléatoires susceptible d'être utilisé dans un capteur du type décrit en relation avec la figure 1.

Le générateur de la figure 5 est un automate cellulaire à comportement chaotique adapté à générer périodiquement, à la fréquence d'un signal d'horloge CLK, un mot pseudo-aléatoire rand de N coefficients binaires rand(i), où N est un nombre entier et i un entier allant de 1 à N.

Ce générateur comprend un étage d'initialisation 501, comprenant N éléments $I_i$ recevant tous un même signal logique d'initialisation INIT. Chaque élément $I_i$ comprend un inverseur, et est configurable pour inverser ou ne pas inverser le signal INIT, de façon à fournir, en sortie de l'étage d'initialisation 501, un motif d'initialisation à N bits. On notera que le mode de réalisation de la figure 5 ne se limite pas à cet exemple particulier d'étage d'initialisation. L'homme de l'art saura prévoir d'autres circuits adaptés à fournir un motif d'initialisation à N bits.

Le générateur de la figure 5 comprend en outre N registres à décalage $503_i$, recevant en entrée les N bits du motif d'initialisation, et fournissant en sortie N valeurs binaires pseudo-aléatoires. Dans cet exemple, chaque registre à décalage $503_i$ comprend K cellules à retard $a_{i,j}$, avec K entier et j entier allant de 1 à K. Ainsi, le générateur de la figure 5 comprend une matrice de cellules à retard à N lignes d'indice i et K colonnes d'indice j.

Dans l'exemple représenté, lors de l'initialisation de l'automate, le motif d'initialisation fourni par l'étage d'initialisation 501 est mémorisé dans la colonne d'indice j=1 de la structure à décalage.

A chaque front montant ou descendant du signal d'horloge CLK, le mot de N bits mémorisé dans chaque colonne d'indice j de la matrice est transféré vers la colonne suivante d'indice j+1, à l'exception du mot mémorisé dans la colonne d'indice j=K qui est transféré vers la sortie de la matrice de cellules à décalage. Dans la colonne d'indice j=1, chaque cellule $a_{i,1}$ (avec i allant de 1 à N) est mise à jour par un étage de transition 505 mettant en oeuvre une fonction de transition ou fonction d'automate fa du générateur. Dans l'exemple de la figure 5, pour chaque cellule $a_{i,1}$ de la colonne d'indice j=1, la fonction de transition est utilisée pour calculer une nouvelle valeur de la cellule basée sur les valeurs de cellules de la colonne d'indice j=2, c'est-à-dire des valeurs qu'avaient des cellules de la colonne d'indice j=1 au front d'horloge précédent. A titre d'exemple, la fonction de transition fa du générateur peut être telle que:

$$a_{i,1} = XOR\big(OR(a_{i+1,2},\ a_{i,2}),\ a_{i-1,2}\big),$$

où XOR désigne la fonction logique OU exclusif et OR désigne la fonction logique OU non exclusif. Le mode de réalisation de la figure 5 ne se limite toutefois pas à cette fonction de transition particulière.

Après un certain nombre de mises à jour de l'automate, le mot à N bits en sortie de la colonne d'indice j=K de la matrice de cellules à retard a des propriétés pseudo-aléatoires.

Selon un aspect du mode de réalisation de la figure 5, le générateur pseudo-aléatoire comprend en outre, en sortie de la structure à décalage, un étage 507 d'adaptation de l'espérance du générateur.

En effet, dans l'exemple de la figure 5, en sortie de la dernière colonne de la matrice (la colonne d'indice j=K), l'espérance du générateur est de 1/2, c'est-à-dire que pour chaque registre à décalage $503_i$ de la structure, la probabilité que, pour un tirage, la valeur de sortie du registre soit égale à 1, est de 1/2.

Toutefois, dans certains cas, il peut être avantageux de réduire l'espérance de sortie d'un générateur pseudo-aléatoire. En particulier, dans le capteur de la figure 1, si les supports de mesure comportent un nombre N de pixels relativement élevé, il peut être souhaitable de réduire l'espérance de sortie du générateur pseudo-aléatoire, de façon à éviter que lors d'une mesure le nombre de pixels du support activés simultanément en lecture soit trop élevé, ce qui pourrait poser problème pour la lecture de la valeur de sortie du support, voire entraîner une dégradation du capteur.

L'étage 507 met en oeuvre une fonction de réduction d'espérance fcmd qui, à chaque changement d'état de l'automate, génère un mot pseudo-aléatoire de N bits d'espérance inférieure à 1/2, à partir de valeurs contenues dans la matrice de cellules à retard. Pour chaque ligne de la matrice de cellules, la fonction fcmd génère une valeur fcmd(i) basée sur les valeurs de diverses cellules de la matrice. La fonction fcmd est par exemple telle que:

$$fcmd(i) = AND4(a_{i-1,K}, a_{i-1,K-1}, a_{i,K-2}, a_{i,K}),$$

où AND4 désigne la fonction logique ET à quatre entrées. Le mode de réalisation de la figure 5 ne se limite toutefois pas à cette fonction d'adaptation d'espérance particulière.

Un étage analogique de sortie 509 (fana) peut en outre optionnellement être prévu en sortie de l'étage d'adaptation d'espérance 507 pour adapter les niveaux de tension des signaux logiques fournis par l'étage 507. Dans l'exemple représenté, l'étage 509 fournit N signaux binaires pseudo-aléatoires rand(1) à rand(N) susceptibles d'être exploités pour mettre en oeuvre l'acquisition compressive d'une image dans le capteur de la figure 1.

A titre d'exemple, dans le cas d'un capteur CMOS du type décrit en relation avec la figure 1 ayant une matrice de pixels de 512 lignes par 512 colonnes, on peut prévoir de mettre en oeuvre une acquisition compressive sur la base de supports de mesure comportant chacun 64 pixels situés sur une même colonne du capteur (chaque colonne est ainsi divisée en 8 supports de mesure). Dans ce cas, le mot rand généré par le générateur pseudo-aléatoire peut comporter 64 coefficients binaires. Pour générer le mot rand, on peut prévoir un générateur pseudo-aléatoire du type décrit en relation avec la figure 5, comportant une matrice de cellules à retard à 64 lignes (N=64) et 3 colonnes (K=3).

On notera que le générateur pseudo-aléatoire de la figure 5 peut être avantageusement utilisé dans d'autres dispositifs que le capteur CMOS de la figure 1. En particulier, le générateur pseudo-aléatoire de la figure 5 peut avantageusement être utilisé dans toute architecture de capteur CMOS mettant en oeuvre des méthodes d'acquisition compressive. Plus généralement, le générateur pseudo-aléatoire de la figure 5 peut être avantageusement utilisé dans toute application pouvant tirer avantage d'une réduction de l'espérance d'un signal pseudo-aléatoire.

On notera de plus que le capteur de la figure 1 ne se limite pas à l'utilisation d'un générateur pseudo-aléatoire du type décrit en relation avec la figure 5. L'homme de l'art saura mettre en oeuvre le fonctionnement recherché en utilisant d'autres types de générateurs pseudo-aléatoires de coefficients binaires.

Des modes de réalisation particuliers ont été décrits. Diverses variantes et modifications apparaîtront à l'homme de l'art.

En particulier, les modes de réalisation décrits dans la présente demande ne se limitent pas à l'exemple particulier de structure de pixel des figures 2A et 2B. L'homme de l'art saura obtenir le fonctionnement recherché en utilisant d'autres structures de pixel CMOS actifs, par exemple des structures à quatre transistors MOS pour une photodiode, du type couramment désigné dans la technique par l'expression « pixel 4T ». De plus, les modes de réalisation décrits ne se limitent pas à des pixels réalisés à base de transistors MOS à canal N. L'homme de l'art saura obtenir le fonctionnement recherché en utilisant des pixels à base de transistors MOS à canal P, ou des pixels comprenant à la fois des transistors MOS à canal N et des transistors MOS à canal P.

De plus, les modes de réalisation décrits ne se limitent pas à l'exemple particulier d'agencement des pixels sur le capteur décrit en relation avec les figures. L'homme de l'art saura mettre en oeuvre le fonctionnement recherché en utilisant d'autres agencements des pixels sur le capteur et notamment des agencements non matriciels.

En outre, les modes de réalisation décrits ne se limitent pas à l'exemple particulier d'agencement des supports de mesure d'acquisition compressive sur le capteur décrit en relation avec les figures. L'homme de l'art saura mettre en oeuvre le fonctionnement recherché en utilisant des supports de mesure dont les pixels sont disposés autrement qu'en colonne. A titre d'exemple, les pixels des supports de mesure pourront être disposés en ligne, en matrice, ou selon toute autre disposition, dans la mesure où les pixels d'un même support de mesure partagent une même piste conductrice de sortie.

Par ailleurs, les modes de réalisation décrits ne se limitent pas à l'exemple particulier décrit en relation avec les figures, dans lequel les pixels du capteur sont commandables simultanément par ligne.

On notera que dans l'exemple décrit en relation avec les figures 1, 2A et 2B, le capteur peut aisément être configuré pour permettre la réalisation de mesures d'acquisition compressive sur la base de supports de mesure disposés en ligne. Pour cela, on peut prévoir de relier les noeuds P de tous les pixels d'une même ligne à une même piste conductrice de polarisation de ligne, et les noeuds P des pixels de lignes distinctes à des pistes conductrices de polarisation de ligne distinctes (non représentées sur les figures). Pour réaliser une acquisition compressive sur la base de supports de mesure disposés en colonne, on peut alors, comme cela a été décrit ci-dessus: appliquer le potentiel $V_{POL+}$ sur toutes les colonnes du capteur et appliquer le potentiel $V_{POL-}$ sur toutes les lignes du capteur ; activer, via les signaux RS(j) les lignes que l'on souhaite activer simultanément en lecture ; et lire les valeurs de sortie des supports de mesure, en courant, sur les pistes conductrices de sortie de colonne 211 du capteur. Pour réaliser une acquisition compressive sur la base de supports de mesure disposés en ligne, on peut: appliquer le potentiel $V_{POL-}$ sur toutes les lignes du capteur; appliquer un signal d'activation en lecture RS(j) sur toutes les lignes du capteur ; appliquer le potentiel $V_{POL+}$

sur les seules colonnes du capteur que l'on souhaite activer simultanément en lecture, et appliquer un potentiel bas, par exemple le potentiel $V_{POL-}$ ou le potentiel GND sur les autres colonnes ; et lire les valeurs de sortie des supports de mesure, en courant, sur les pistes conductrices de polarisation de ligne du capteur.

Si une configuration de ce type est prévue, il est en outre possible de combiner, lors de l'acquisition d'une même séquence vidéo ou lors de l'acquisition d'une même image (par exemple dans le cas d'un procédé à acquisitions multiples du type décrit en relation avec la figure 4), des mesures d'acquisition compressives basées sur des supports disposés en ligne et des mesures d'acquisition compressive basées sur des supports disposés en colonne.

Par ailleurs, les modes de réalisation décrits dans la présente demande sont compatibles aussi bien avec des capteurs CMOS monochromatiques, qu'avec des capteurs CMOS couleur. A titre d'exemple, dans le cas d'un capteur couleur, des filtres couleur agencés selon un motif de type Bayer, répétitif ou non, peuvent être disposés au dessus des photodiodes du capteur.

## Revendications

1. Capteur d'image CMOS (100) comportant :

   une pluralité de pixels (101) répartis en plusieurs sous-ensembles, chaque sous ensemble définissant un support de mesure ; et
   un circuit (109 ; 105 ; 107) adapté à mettre en oeuvre un procédé d'acquisition compressive d'une image, dans lequel une pluralité de mesures non-cohérentes basées chacune sur un support de mesure sont effectuées, ce procédé comprenant:

   pour une durée d'intégration donnée des pixels (101) du capteur, lire, pour chaque support de mesure, une unique mesure de sortie basée sur les valeurs de sortie d'une sélection pseudo-aléatoire d'un ou plusieurs pixels (101) du support.

2. Capteur (100) selon la revendication 1, dans lequel, lors de la mise en oeuvre dudit procédé d'acquisition compressive, les périodes d'intégration des pixels (101) d'un même support de mesure coïncident dans le temps.

3. Capteur (100) selon la revendication 1 ou 2, dans lequel ladite unique mesure de sortie est représentative de la somme des valeurs de sortie desdits un ou plusieurs pixels (101) du support sélectionnés.

4. Capteur (100) selon l'une quelconque des revendications 1 à 3, dans lequel tous les pixels (101) d'un même support de mesure sont connectés à une même piste conductrice de sortie (211).

5. Capteur (100) selon la revendication 4, dans lequel, lors de la mise en oeuvre dudit procédé d'acquisition compressive, les pixels (101) du capteur sont configurés de façon que, lorsque plusieurs pixels d'un même support sont activés simultanément en lecture, on puisse lire, sur la piste de sortie (211) commune aux pixels du support, une grandeur représentative de la somme des valeurs de sortie des pixels activés.

6. Capteur (100) selon la revendication 5, dans lequel ladite grandeur est un courant.

7. Capteur (100) selon la revendication 5 ou 6, dans lequel chaque piste de sortie (211) du capteur est reliée à un circuit de lecture (READ) de ladite grandeur.

8. Capteur (100) selon l'une quelconque des revendications 1 à 7, dans lequel des pixels (101) de supports de mesure distincts sont connectés à des pistes de sortie conductrices (211) distinctes.

9. Capteur (100) selon l'une quelconque des revendications 1 à 8, dans lequel les pixels (101) du capteur sont disposés selon une matrice (103), et dans lequel tous les pixels d'un même support de mesure appartiennent à une même colonne de la matrice (103).

10. Capteur (100) selon la revendication 9, dans lequel chaque colonne de la matrice comprend plusieurs supports de mesure distincts.

11. Capteur (100) selon la revendication 10, dans lequel les pixels (101) de chaque support de mesure sont régulièrement répartis sur toute la hauteur de la colonne à laquelle appartient le support.

**12.** Capteur (100) selon l'une quelconque des revendications 9 à 11, dans lequel tous les pixels (101) d'une même colonne sont connectés à une même piste conductrice (211) de sortie.

**13.** Capteur (100) selon l'une quelconque des revendications 1 à 12, dans lequel les pixels (101) sont des pixels actifs comportant chacun un photodétecteur (201) et un amplificateur de sortie actif comportant des transistors MOS (205, 207).

**14.** Capteur (100) selon l'une quelconque des revendications 1 à 13, dans lequel chaque pixel (101) comprend une photodiode (201) et trois transistors MOS (203, 205, 207).

**15.** Capteur (100) selon l'une quelconque des revendications 1 à 14, comprenant un générateur (109) de coefficients binaires pseudo-aléatoires, et un circuit (111) de contrôle adapté à effectuer ladite sélection pseudo-aléatoire d'un ou plusieurs pixels (101) du support sur la base des coefficients fournis par ledit générateur (109).

**16.** Capteur (100) selon la revendication 15, dans lequel le générateur (109) comprend un étage (507) de réduction de son espérance de sortie.

**17.** Capteur (100) selon l'une quelconque des revendications 1 à 16, dans lequel ledit procédé d'acquisition compressive comprend, pour chaque support de mesure, la lecture d'au moins deux mesures de sortie correspondant à des durées d'intégration distinctes des pixels (101) du support, les pixels du support n'étant pas réinitialisés entre lesdites au moins deux lectures, de façon à permettre la reconstruction d'une image à grande gamme dynamique.

**18.** Procédé d'acquisition compressive d'une image par un capteur d'image CMOS (100) comportant une pluralité de pixels (101) répartis en plusieurs sous-ensembles, chaque sous ensemble définissant un support de mesure, ce procédé comprenant:

effectuer une pluralité de mesures non-cohérentes basées chacune sur un support de mesure ; et
pour une durée d'intégration donnée des pixels (101) du capteur, lire, pour chaque support de mesure, une unique mesure de sortie basée sur les valeurs de sortie d'une sélection pseudo-aléatoire d'un ou plusieurs pixels (101) du support.

**19.** Procédé selon la revendication 18, comprenant, pour chaque support de mesure, la lecture d'au moins deux mesures de sortie correspondant à des durées d'intégration distinctes des pixels (101) du support, les pixels du support n'étant pas réinitialisés entre lesdites au moins deux lectures, de façon à permettre la reconstruction d'une image à grande gamme dynamique.

**20.** Procédé selon la revendication 18 ou 19, dans lequel les périodes d'intégration des pixels (101) d'un même support de mesure coïncident dans le temps.

**Patentansprüche**

**1.** Ein CMOS Bildsensor (100), wobei der Sensor Folgendes aufweist:

eine Vielzahl von Pixel (101) die in einer Vielzahl von Untersätzen angeordnet ist, wobei jeder Untersatz eine Messunterstützung definiert; und
einen Schaltkreis (109; 105; 107), der adaptiert ist ein komprimierendes Abtastverfahren zu implementieren, wobei eine Vielzahl von nicht kohärenten Messungen ausgeführt wird, wobei jede Messung auf einer Messunterstützung basiert, wobei das Verfahren die folgenden Schritte aufweist:

Lesen, für jede Messunterstützung für eine gegebene Integrationszeit der Sensorpixel (101), einer einzelnen Ausgabemessung, basierend auf den Ausgabewerten einer pseudo zufälligen Auswahl von einem oder einer Vielzahl von Pixel (101) der Unterstützung.

**2.** Der Sensor (100) nach Anspruch 1, wobei, während der Implementierung des komprimierenden Abtastverfahrens, die Integrationsperioden der Pixel (101) von einer gleichen Messunterstützung in der Zeit zusammenfallen.

**3.** Der Sensor (100) nach Anspruch 1 oder 2, wobei die einzelne Ausgabemessung repräsentativ ist für die Summe der Ausgabewerte von dem einen oder einer Vielzahl von ausgewählten Pixel (101) der Unterstützung.

4. Der Sensor (100) nach einem der Ansprüche 1 bis 3, wobei alle Pixel (101) von einer gleichen Messunterstützung mit einer gemeinsamen Ausgabe Verbindungsleitung (211) verbunden sind.

5. Der Sensor (100) nach Anspruch 4, wobei, während der Implementierung des komprimierenden Abtastverfahrens, die Sensorpixel (101) derart konfiguriert sind, dass, wenn eine Vielzahl von Pixel von einer gleichen Unterstützung gleichzeitig in einem Lesemodus aktiviert sind, eine quantitative Darstellung der Summe der Ausgabewerte der aktivierten Pixel von der Ausgabeleitung (211), die für die Pixel der Unterstützung gleich ist, gelesen werden kann.

6. Der Sensor (100) nach Anspruch 5, wobei die Quantität ein Strom ist.

7. Der Sensor (100) nach Anspruch 5 oder 6, wobei jede Ausgabeleitung (211) des Sensors mit einem Schaltkreis (READ) zum Lesen der Quantität verbunden ist.

8. Der Sensor (100) nach einem der Ansprüche 1 bis 7, wobei Pixel (101) von unterschiedlichen Messunterstützungen mit unterschiedlichen Ausgabe Verbindungsleitungen (211) verbunden sind.

9. Der Sensor (100) nach einem der Ansprüche 1 bis 8, wobei die Sensorpixel (101) in eine Array (103) angeordnet sind und wobei alle Pixel von einer gleichen Messunterstützung zu einer gleichen Spalte des Array (103) gehören.

10. Der Sensor (100) nach Anspruch 9, wobei jede Spalte des Array eine Vielzahl von separaten Messunterstützungen aufweist.

11. Der Sensor (100) nach Anspruch 10, wobei die Pixel (101) von jeder Messunterstützung gleich verteilt sind entlang der gesamten Höhe der Spalte zu der die Unterstützung gehört.

12. Der Sensor (100) nach einem der Ansprüche 9 bis 11, wobei alle Pixel (101) von einer selben Spalte mit einer selben Ausgabe-Verbindungsleitung (211) verbunden sind.

13. Der Sensor (100) nach einem der Ansprüche 1 bis 12, wobei die Pixel (101) aktive Pixels sind, wobei jedes einen Fotodetektor (201) und einen aktiven Ausgabeverstärker aufweist, der einen MOS Transistor (205, 207) aufweist.

14. Der Sensor (100) nach einem der Ansprüche 1 bis 13, wobei jedes Pixel (101) eine Fotodiode (201) aufweist und drei MOS Transistoren (203, 205, 207).

15. Der Sensor (100) nach einem der Ansprüche 1 bis 14, wobei der Sensor einen Generator (109) für pseudo zufällige Binärkoeffizienten aufweist, und einen Steuerschaltkreis (111), der geeignet ist die pseudo zufällige Auswahl von einem oder einer Vielzahl von Pixel (101) der Unterstützung auszuführen, basierend auf den Koeffizienten, die von dem Generator (109) bereitgestellt werden.

16. Der Sensor (100) nach Anspruch 15, wobei der Generator (109) eine Stufe (507) zum Verringern seiner Ausgabeerwartung aufweist.

17. Der Sensor (100) nach einem der Ansprüche 1 bis 16, wobei das komprimierende Abtastverfahren ferner folgende Schritte aufweist, für jede Messunterstützung, Lesen von wenigstens zwei Ausgabemessungen, die unterschiedlichen Integrationszeiten der Pixel (101) der Unterstützung entsprechen, wobei die Unterstützungspixel zwischen den wenigstens zwei Leseoperationen nicht zurückgesetzt werden, um zu erlauben ein Bild zu rekonstruieren mit einem großen dynamischen Bereich.

18. Ein Verfahren zum komprimierenden Abtasten eines Bildes durch einen CMOS Bildsensor (100), der eine Vielzahl von Pixel (101) aufweist, die in einer Vielzahl von Untersätzen verteilt sind, wobei jeder Untersatz eine Messunterstützung definiert, und wobei das Verfahren die folgenden Schritte aufweist:

Ausführen einer Vielzahl von nicht kohärenten Messungen, wobei jede auf einer Messunterstützung basiert; und für eine gegebene Integrationszeit der Sensorpixel (101), Lesen, für jede Messunterstützung, einer einzelnen Ausgabemessung, basierend auf den Ausgabewerten von einer pseudo zufälligen Auswahl von einem oder einer Vielzahl von Pixel (101) der Unterstützung.

**19.** Das Verfahren nach Anspruch 18, wobei das Verfahren ferner folgende Schritte aufweist, für jede Messunterstützung, Lesen von wenigstens zwei Ausgabemessungen, die unterschiedlichen Integrationszeiten der Unterstützungspixel (101) entsprechen, wobei die Unterstützungspixel zwischen den wenigstens zwei Leseoperationen nicht zurückgesetzt werden um zu erlauben ein Bild zu rekonstruieren das einen großen dynamischen Bereich aufweist.

**20.** Das Verfahren nach Anspruch 18 oder 19, wobei die Integrationsperioden der Pixel (101) von einer gleichen Messunterstützung in der Zeit zusammenfallen.

**Claims**

**1.** A CMOS image sensor (100) comprising:

a plurality of pixels (101) arranged in a plurality of subsets, each subset defining a measurement support; and a circuit (109; 105; 107) adapted to implement a compressive image sensing method, wherein a plurality of non-coherent measurements are made, each measurement being based on a measurement support, the method comprising:

for a given integration time of the sensor pixels (101), reading, for each measurement support, a single output measurement based on the output values of a pseudo-random selection of one or a plurality of pixels (101) of the support.

**2.** The sensor (100) of claim 1, wherein, on implementation of said compressive sensing method, the integration periods of the pixels (101) of a same measurement support coincide in time.

**3.** The sensor (100) of claim 1 or 2, wherein said single output measurement is representative of the sum of the output values of said one or a plurality of selected pixels (101) of the support.

**4.** The sensor (100) of any of claims 1 to 3, wherein all the pixels (101) of a same measurement support are connected to a same output conductive track (211).

**5.** The sensor (100) of claim 4, wherein, on implementation of said compressive sensing method, the sensor pixels (101) are configured so that, when a plurality of pixels of a same support are simultaneously activated in read mode, a quantity representative of the sum of the output values of the activated pixels can be read from the output track (211) common to the pixels of the support.

**6.** The sensor (100) of claim 5, wherein said quantity is a current.

**7.** The sensor (100) of claim 5 or 6, wherein each output track (211) of the sensor is connected to a circuit (READ) for reading said quantity.

**8.** The sensor (100) of any of claims 1 to 7, wherein pixels (101) of different measurement supports are connected to different output conductive tracks (211).

**9.** The sensor (100) of any of claims 1 to 8, wherein the sensor pixels (101) are arranged in an array (103), and wherein all the pixels of a same measurement support belong to a same column of the array (103).

**10.** The sensor (100) of claim 9, wherein each column of the array comprises a plurality of separate measurement supports.

**11.** The sensor (100) of claim 10, wherein the pixels (101) of each measurement support are evenly distributed along the entire height of the column to which the support belongs.

**12.** The sensor (100) of any of claims 9 to 11, wherein all the pixels (101) of a same column are connected to a same output conductive track (211).

**13.** The sensor (100) of any of claims 1 to 12, wherein the pixels (101) are active pixels, each comprising a photodetector (201) and an active output amplifier comprising MOS transistors (205, 207).

**14.** The sensor (100) of any of claims 1 to 13, wherein each pixel (101) comprises one photodiode (201) and three MOS transistors (203, 205, 207).

**15.** The sensor (100) of any of claims 1 to 14, comprising a generator (109) of pseudo-random binary coefficients, and a control circuit (111) capable of performing said pseudo-random selection of one or a plurality of pixels (101) of the support based on the coefficients provided by said generator (109).

**16.** The sensor (100) of claim 15, wherein the generator (109) comprises a stage (507) for decreasing its output expectation.

**17.** The sensor (100) of any of claims 1 to 16, wherein said compressive sensing method comprises, for each measurement support, reading at least two output measurements corresponding to different integration times of the pixels (101) of the support, where the support pixels are not reset between said at least two read operations, to enable to reconstruct an image having a wide dynamic range.

**18.** A method of compressive sensing of an image by a CMOS image sensor (100) comprising a plurality of pixels (101) distributed in a plurality of subsets, each subset defining a measurement support, the method comprising:

making a plurality of non-coherent measurements, each one being based on a measurement support; and
for a given integration time of the sensor pixels (101), reading, for each measurement support, a single output measurement based on the output values of a pseudo-random selection of one or a plurality of pixels (101) of the support.

**19.** The method of claim 18, comprising, for each measurement support, reading at least two output measurements corresponding to different integration times of the support pixels (101), where the support pixels are not reset between said at least two read operations, to enable to reconstruct an image having a wide dynamic range.

**20.** The method of claim 18 or 19, wherein the integration periods of the pixels (101) of a same measurement support coincide in time.

Fig 1

Fig 2A

Fig 2B

Fig 3

Fig 4

Fig 5

## RÉFÉRENCES CITÉES DANS LA DESCRIPTION

**Documents brevets cités dans la description**

- US 6417882 B

- CN 102186025

**Littérature non-brevet citée dans la description**

- **EMMANUEL J. CANDÈS.** *An Introduction To Compressive Sensing*
- **M. R. DADKHAH.** *Block-Based Compressive Sensing in a CMOS Image Sensor*

- **YUSUKE OIKE.** *CMOS Image Sensor With Per-Column $\sum\Delta$ ADC and Programmable Compressed Sensing*